# EUROPÄISCHE PATENTSCHRIFT

(11) **EP 2 163 408 B1**
(45) Veröffentlichungstag und Bekanntmachung des Hinweises auf die Patenterteilung: **02.02.2011**
(21) Anmeldenummer: 09450148.3
(22) Anmeldetag: 12.08.2009
(51) Int. Cl.: B60C 27/08

(54) **Gleitzschutzkette**
Antiskid chain
Chaîne de protection de glissement

(30) Priorität: 16.09.2008 AT 14452008
(43) Veröffentlichungstag der Anmeldung: 17.03.2010
(73) Patentinhaber: Pewag Schneeketten GMBH & Co KG, 9371 Brückl (AT)
(72) Erfinder: Pengg, Ägyd, 9020 Klagenfurt (AT); Nieß, Bernhard, 8312 Ottendorf (AT)
(74) Vertreter: Matschnig, Franz

(56) Entgegenhaltungen:
- EP-A- 1 752 320
- US-A- 1 335 165
- US-A- 2 673 586

## Beschreibung

Die gegenständliche Erfindung betrifft eine Gleitschutzkette mit einem Laufnetz mit Spurkreuzen und einem in einem montierten Zustand an einer Reifenseite (beispielsweise der Reifenaußenseite) anliegenden Seitenstrang sowie einem in montiertem Zustand an der gegenüber liegenden Reifenseite (z.B. der Reifeninnenseite) anliegenden Spannstrang.

Unter Seitenstrang wird in dieser Anmeldung eine Seitenkette verstanden, welche nicht als Spannstrang verwendet wird. Der Seitenstrang ist bevorzugter Weise in sich geschlossen ausgebildet, wobei er z.B. entlang einer Umfangslinie des Reifens verläuft. Bei den hier in erster Linie betrachteten Gleitschutzketten dient der im montierten Zustand an der Reifeninnenseite liegende Strang zum Spannen der Gleitschutzkette, jedoch kann auch der Außenstrang als Spannstrang ausgeführt sein.

Aus der AT 500295 B1 ist eine Gleitschutzkette zum Aufziehen auf einen Fahrzeugreifen auf einer Felge bekannt geworden, bei welcher an Teilen der Kette, die mit der Felge in Berührung kommen können, ein Felgenschutzelement, welches eine Halterung für einen an der Reifenaußenseite anliegenden Spannstrang bildet bekannt geworden. Die bekannten Felgenschutzelemente weisen Halterungen auf, durch welche der Spannstrang zu Zwecken des Spannens durchgezogen werden kann. Nachteilig an der bekannten Ausführungsform ist vor allem, dass bei einer Gleitschutzkette, bei welcher der Spannstrang an der Reifeninnenseite angeordnet ist und an der Reifenaußenseite lediglich ein Seitenstrang vorgesehen ist, keine gute Anbindung des Spurkreuzes an den Seitenstrang gewährleistet ist.

Die EP 1 520 734 A2 offenbart eine Spannvorrichtung für Schneeketten, bei der das Spurkreuz über Haken in den Seitenstrang eingehängt ist. Ein Kopfteil dieser Spannvorrichtung umgibt jenes Kettenglied des Seitenstranges, in das ein solcher Haken eingehängt ist, lässt den Haken selbst frei, sodass dieser nach wie vor mit der Felge in Berührung kommen kann. In der EP 0 976 588 A1 ist eine Felgenschutzvorrichtung beschrieben, die den Haken samt den zugehörenden Endgliedern der Laufnetzketten gänzlich umgibt.

Zur Anbindung des Spurkreuzes an Spannstränge, einschließlich eines Innenstrangs, schlägt die US 2,685,321 Aufhängeklemmen vor, die jedoch entlang des Spannstrangs verschiebbar sind. Die US 2,673,586 zeigt eine Gleitschutzkette, in der die Enden von quer über die Lauffläche verlaufenden Kettensträngen mit schellenartige Adapterelemente an einen umlaufende Federstrang befestigt sind.

Die EP 0 911194 A2 und die JP 2002-301918 A offenbaren Klemmen zur Befestigung der Enden von Laufnetzketten an einen Seitenstrang, die jedoch nicht zur Befestigung an einen dehnbaren Strang ausgelegt sind.

Bei einem üblichen Ansatz, um eine Anbindung des Spurkreuzes an einen Spannstrang zu ermöglichen, bei der keine Verschiebung entlang des Spannstranges zu befürchten ist, weist die Ummantelung des Spannstranges Unterbrechungen auf, sodass der Spannstrang an diesen Stellen einen geringeren Querschnitt aufweist. An den Unterbrechungen der Ummantelung werden sodann Haken befestigt, welche den Spannstrang mit dem Spurkreuz verbinden. Diese Methode nach dem Stand der Technik hat jedoch den Nachteil, dass sie sehr aufwendig ist und somit hohe Herstellungskosten bedingt. Außerdem können sich die Haken um den Spannstrang als Achse verdrehen, auch wenn ein seitliches Verrutschen durch die Ummantelung weitgehend verhindert wird. Durch die Verdrehbarkeit der Haken um den Spannstrang, insbesondere wenn dieser ein Innenstrang ist, wird jedoch die Montage erschwert. Einen vergleichbaren Ansatz zeigt die gattungstäldende Schneekette der EP 1 752 320 A1, bei der hohlzylindrische elastische Teile den Strangkern des Spannstrangs umhüllen und an die Kopfteile dieser elastischen Teile über ein Anschlusselement Kettenstränge befestigt sind; zwischen diesen Kopfteilen bestehen Unterbrechungen der Umhüllung des Strangkems.

Es ist daher eine Aufgabe der Erfindung den oben genannten Nachteil des Stands der Technik zu überwinden, und eine dauerhafte, positionsfeste Verbindung mit einem dehnbaren Innenstrang oder Außenstrang ermöglicht.

Diese Aufgabe wird mit einer Gleitschutzkette der eingangs genannten Art erfindungsgemäß dadurch gelöst, dass auf dem dehnbaren Spannstrang Verbindungselemente, in welche je ein den Spannstrang mit zumindest einem Spurkreuz verbindender Haken eingehängt sind, auf einer zusätzlichen Ummantelung des Spannstranges verrutschungssicher aufgeklemmt sind.

Durch diese erfindungsgemäße Lösung werden die genannten Nachteile auf effiziente Weise überwunden. Es ergibt sich eine besonders zuverlässige Funktion und eine einfache Handhabung der Gleitschutzkette.

Im Sinne einer einfachen Montage ist es auch, wenn das Verbindungselement zweiteilig mit einem der Reifenaußenseite abgewandten Vorderteil und einen der Reifenaußenseite zugewandten Hinterteil ausgebildet ist.

Zur einfachen Befestigung des Hakens kann das Verbindungselement zumindest eine Öffnung zum Einhängen des Hakens aufweisen.

Ein guter Halt des Verbindungselementes lässt sich dadurch gewährleisten, dass das Verbindungselement einen Führungskanal, worin die Fortsätze zum Fixieren bzw. Klemmen der Ummantelung des Spannstranges angeordnet sind. Hierbei kann sowohl in den Vorderteil des Verbindungselementes als auch in den Hinterteil des Verbindungselementes je eine einen U-förmigen Querschnitt aufweisende Hälfte des Führungskanals angeordnet sein.

Eine gute Verbindung von Vorder- und Hinterteil lässt sich dadurch gewährleisten, dass der Vorderteil und der Hinterteil des Verbindungselementes über zumindest ein Verbindungsmittel, beispielsweise ein Niet oder eine Schraube miteinander verbunden sind.

Gemäß einer weiteren Ausführungsform der Erfindung kann das Verbindungselement einen auf den Spannstrang aufklemmbaren Unterteil mit zumindest einem in einem montierten Zustand von dem Seitenstrang wegragenden und im wesentlichen parallel zu einer Reifenflanke verlaufenden Abschnitt mit einer Anschlussöse für den Haken aufweist, wobei zudem ein in einem montierten Zustand von dem Haken abschnittsweise durchgriffener Aufsatz vorgesehen ist, welcher auf den Unterteil aufschiebbar ist, der in einem montierten Zustand zumindest den Abschnitt im wesentlichen umhüllt.

Eine gute Klemmwirkung auf dem Spannstrang kann dadurch erzielt werden, dass an einer dem Spannstrang zugewandten Innenfläche der Verbindungselemente zumindest ein Fortsatz zum Fixieren bzw. Klemmen einer Ummantelung des Spannstranges vorgesehen ist. Insbesondere kann bei der soeben genannten Ausführungsform der Unterteil an zumindest seiner der Oberfläche des Stranges zugewandten inneren Oberflächen zumindest einen Klemmfortsatz in Richtung des Stranges aufweisen.

Als besonders vorteilhaft im Sinne einer komfortablen Handhabung und einer guten Funktionalität ist es, wenn der Spannstrang als zugelastischer Strang mit einem Fliehkraft-aktivierten Spannschloss ausgebildet ist. Fliehkraftaktivierte Spannschlösser sind beispielsweise in der WO 2008/058304 A2 der Anmelderin offenbart. Beispielsweise kann der zugelastische Strang eine Zugfeder aufweisen, die von einer als Umhüllung dienenden Umwebung umgeben ist.

Ein zugelastischer Strang kann in einer vorteilhaften Weiterbildung eine Umhüllung mit als Sperrfäden dienenden Filamenten aufweisen, die lediglich bis zu einer maximalen Dehnung des Spannstranges streckbar sind. Dies ergibt einen Schutz des Spannstranges, insbesondere der erwähnten Zugfeder, vor Überdehnung. Die Filamente können günstiger Weise aus einem der Kunststoffe auf Polyesterbasis und/oder Kevlar-Basis bestehen.

In einer Weiterentwicklung der Erfindung sind die Spurkreuze mit dem Außenseitenstrang über in je zumindest ein Kettenglied des Seitenstranges eingehängte Haken verbunden, wobei je Haken eine den Haken und das zumindest eine Kettenglied umfassende Felgenschutzabdeckung vorgesehen ist. Durch diese Ausbildung lassen sich sowohl eine gute Anbindung des Seitenstranges an das Spurkreuz als auch ein sehr effizienter Felgenschutz erbringen.

Bei dieser Weiterentwicklung wird eine nachträgliche Montage der Felgenschutzabdeckung auf der Gleitschutzkette dadurch wesentlich erleichtert, dass die Felgenschutzabdeckung einen der Reifenaußenseite abgewandten Vorderteil und einen der Reifenaußenseite zugewandten Hinterteil aufweist, wobei Vorder- und Hinterteil Ausnehmungen zur Aufnahme des zumindest einen Kettengliedes und des Hakens aufweisen. Auch lässt sich die Montage noch weiter dadurch vereinfachen, dass der Vorderteil und der Hinterteil der Felgenschutzabdeckung mittels einer Schnappverbindung auf dem Haken und dem zumindest einen Kettenglied fixierbar sind, wobei zumindest eine der beiden Seiten der Felgenschutzabdeckung zumindest einen Fortsatz und die andere Seite zumindest eine mit dem Fortsatz korrespondierende Öffnung aufweist, in welche der Fortsatz einschnappbar ist. Die Handhabung der Felgenschutzabdeckung wird zudem wesentlich erleichtert, wenn der Vorderund der Hinterteil der Felgenschutzabdeckung mittels eines scharnierartigen Gelenks verbunden sind. Günstigerweise kann die Felgenschutzabdeckung den Haken, das Kettenglied des Seitenstranges, in welches der Haken eingehängt ist, sowie Abschnitte der diesem Kettenglied links und rechts benachbarten Kettenglieder in einem montierten Zustand im Wesentlichen umhüllen. Außerdem lässt sich ein Zerkratzen der Felge besonders gut dadurch verhindern, dass die Felgenschutzabdeckung aus Kunststoff gefertigt ist.

Die Handhabung und der Bedienungskomfort lassen sich noch dadurch weiter verbessern, dass zumindest eine der Felgenschutzabdeckungen besonders gekennzeichnet ist, beispielsweise durch eine besondere Farbgebung. Die Kennzeichnung ist vor allem für die Montage und Demontage der Kette sehr hilfreich, da für den Benutzer die Relativlage der Kette auf dem Reifen mit einem Blick erkennbar ist.

Die Erfindung samt weiterer Vorteile wir im Folgenden anhand einiger nicht einschränkender Ausführungsbeispiele näher erläutert, welche in den Zeichnungen dargestellt sind. In diesen zeigen schematisch:
- Fig. 1: die Außenseite eines Reifens mit einer erfindungsgemäßen Gleitschutzkette mit einem Außenseitenstrang und einem Innenspannstrang;
- Fig. 2: einen Abschnitt eines äußeren Seitenstranges der Gleitschutzkette der Fig. 1 mit einem in ein Kettenglied des Seitenstranges eingehängten Haken zur Anbindung des Seitenstranges an ein Spurkreuz in einer perspektivischen Ansicht;
- Fig. 3 und 4: eine erfindungsgemäße Felgenschutzabdeckung in geöffnetem Zustand in perspektivischer Ansicht auf die Außenseiten (Fig. 3) und die Innenseiten (Fig. 4) des Bauteils;
- Fig. 5: den Abschnitt des Seitenstranges der Fig. 2 mit der darauf montierten Felgen- schutzabdeckung aus Fig. 2 in einer perspektivischen Ansicht;
- Fig. 6: die montierte Felgenschutzabdeckung der Fig. 5 mit eingehängten Kettensträngen des Spurkreuzes in einer perspektivischen Ansicht;
- Fig. 7: die Befestigung von Kettensträngen des Spurkreuzes an einen Innenstrang mittels eines erfindungsgemäßen Verbindungselements;
- Fig. 8: den Innenstrang (ohne Spurkreuz) mit den daran angeordneten Verbindungs- elementen und einem Spannschloss;
- Fig. 9: ein erfindungsgemäßes Verbindungselement zur Anbindung eines Innenstranges an das Spurkreuz der Gleitschutzkette mit einem eingehängten Haken dient;
- Fig.10: und 11 das Vorderteil bzw. Hinterteil des Verbindungselementes der Fig. 9;
- Fig. 12: einen Teil des Verbindungselementes der Fig. 9 mit einem eingelegten Innenstrang in einer perspektivischen Ansicht;
- Fig. 13: eine perspektivische Ansicht des zusammengesetzten und teilweise geöffneten des Verbindungselementes der Fig. 9 mit eingelegtem Innenstrang;
- Fig. 14: das Verbindungselement der Fig. 9 in zusammengesetztem und auf den Innen- strang montiertem Zustand;
- Fig. 15: eine perspektivische Ansicht einer Variante eines auf einen Innenstrang montierten, erfindungsgemäßen Verbindungselementes, bei welchem Endabschnitte bzw. End- glieder von zwei Kettensträngen des Spurkreuzes der erfindungsgemäßen Gleit- schutzkette direkt ohne Zwischenschaltung eines Hakens eingehängt sind;
- Fig. 16: das Verbindungselement aus Fig. 15 in einer Vorderansicht;
- Fig.17: einer weitere Variante eines auf einen Innenstrang aufklemmbaren Verbindungs- elementes in einem montierten Zustand;
- Fig.18: eine Explosionsdarstellung des Verbindungselementes der Fig.17;
- Fig. 19 und 20: je eine perspektivische Ansicht von zwei Varianten eines Unterteils des Ver- bindungselementes der Fig. 17;
- Fig. 21: das Verbindungselement aus Fig. 17 in einem teilweise auf den Innenstrang mon- tierten Zustand in einer perspektivischen Ansicht;
- Fig. 22: ein Ausschnitt des Seitenstranges mit einer Sperrfäden enthaltenden Umhüllung (Umwebung);
- Fig. 23: den Seitenstrang der Fig. 22 in gestrecktem Zustand;
- Fig. 24: einen Ausschnitt einer Variante des Seitenstranges mit einer Umwebung, die Gum- mifäden enthält;
- Fig. 25 und 26: Querschnitte des Seitenstranges der Fig. 24 im Ruhezustand bzw. gestrecktem Zustand.

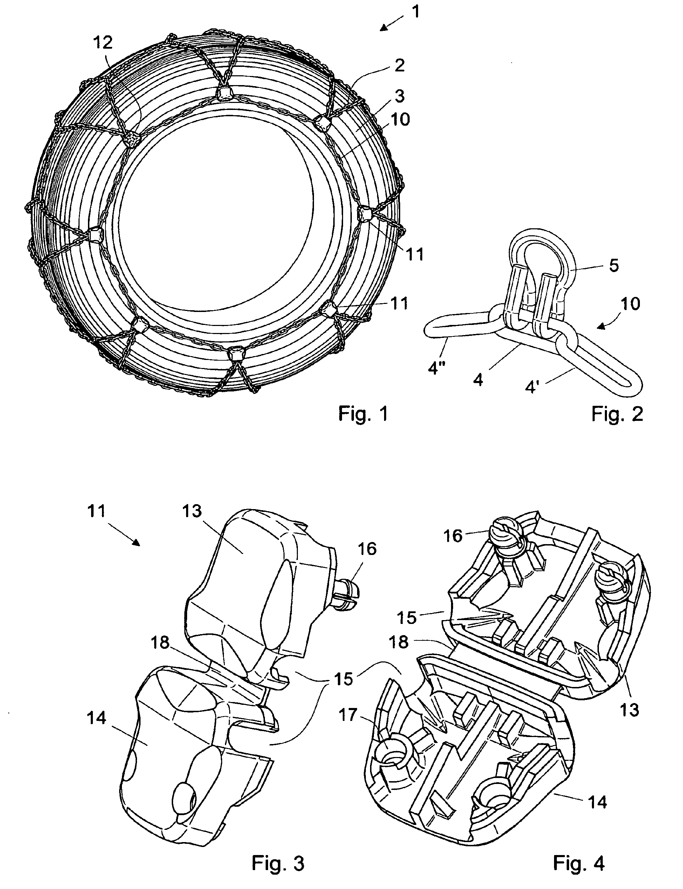

Gemäß Fig. 1 weist eine erfindungsgemäße Gleitschutzkette 1 ein Laufnetz mit Spurkreuzen 2 und einen in einem montierten Zustand an einer Reifenaußenseite 3 anliegenden Seitenstrang 10 auf.

Die Spurkreuze 2 sind über in je zumindest ein Kettenglied 4 des Seitenstranges 10 eingehängte Haken 5 mit dem Seitenstrang 10 verbunden (Fig. 2). Für jeden Haken 5 kann eine den Haken 5 und das zumindest eine Kettenglied 4 umfassende Felgenschutzabdeckung 11 vorgesehen sein. Um die Montage und Demontage zu erleichtern, kann zumindest eine der Felgenschutzabdeckungen 11 besonders gekennzeichnet sein, beispielsweise durch eine besondere Farbgebung. So ist in der Darstellung gemäß Fig. 1 eine Felgenschutzabdeckung 12 farblich besonders gekennzeichnet (punktiert dargestellt). Durch die Kennzeichnung der Felgenschutzabdeckung 12, kann eine genaue Stellung der Kette am Rad angezeigt werden. Die Kennzeichnung kann beispielsweise dadurch erfolgen, dass die Felgenschutzabdeckung 12 eine andere Farbe als die anderen Felgenschutzabdeckungen 11 aufweist.

Gemäß Fig. 3 weist die Abdeckung 11 einen der Reifenaußenseite abgewandten Vorderteil 13 und einen der Reifenaußenseite zugewandten Hinterteil 14 auf. Vorderteil 13 und Hinterteil 14 weisen Ausnehmungen 15 zur Aufnahme des zumindest einen Kettengliedes 4 und des Hakens 5 auf.

Bezugnehmend auf Fig. 4 können der Vorderteil 13 und der Hinterteil 14 der Abdeckung 11 mittels einer Schnappverbindung auf dem Haken 5 und dem zumindest einen Kettenglied 4 fixierbar sein. Hierbei kann mindestens eine der beiden Seiten der Abdeckung 11 zumindest einen Fortsatz 16 und die andere Seite zumindest eine mit dem Fortsatz 16 korrespondierende Öffnung 17 aufweisen, in welche der Fortsatz 16 einschnappbar ist.

Des Weiteren können der Vorder- 13 und der Hinterteil 14 der Felgenschutzabdeckung 11 mittels eines scharnierartigen Gelenks 18 verbunden sein. Darüber hinaus können Vorderteil 13 und Hinterteil 14 sowie das Gelenk 18 einstückig miteinander ausgebildet sein. Bei einer einstückigen Ausbildung der Felgenschutzabdeckung 11 ist es insbesondere aus herstellungstechnischen Gründen von Vorteil, wenn die Abdeckung 11 aus Kunststoff gefertigt ist. Durch die Verwendung von Kunststoff als Material für die Felgenschutzabdeckung 11 lässt sich überdies ein sehr guter Schutz der Felge gegen Beschädigungen bewirken.

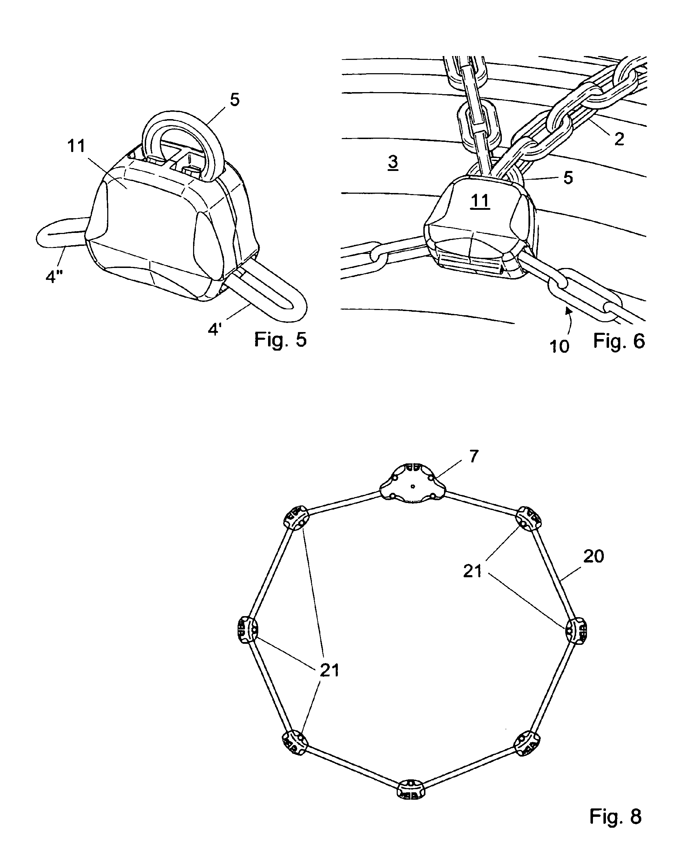

Gemäß den Fig. 5 und 6 kann die Felgenschutzabdeckung 11 den Haken 5, das (in diesen Figuren nicht sichtbare) Kettenglied 4 des Seitenstranges 10, in welches der Haken eingehängt ist, sowie Abschnitte der diesem Kettenglied 4 links und rechts benachbarten Kettenglieder 4', 4" im Wesentlichen umhüllen.

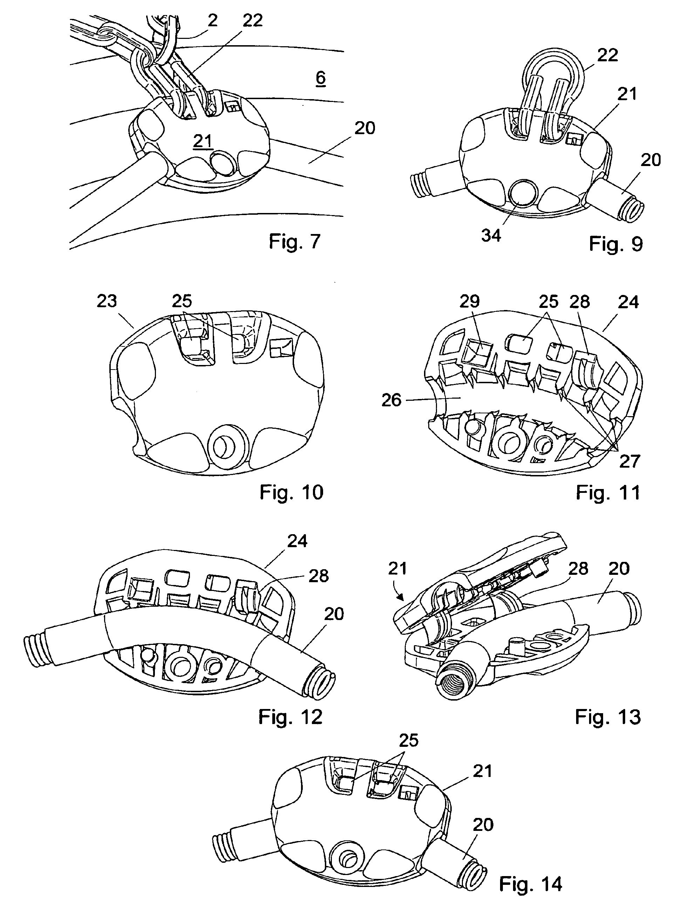

Wie in Fig. 7 und 8 illustriert kann die Gleitschutzkette 1 einen Spannstrang in Form eines an der Reifeninnenseite 6 anliegenden Innenstranges 20 aufweisen, auf welchen Verbindungselemente 21 verrutschungs- und verdrehsicher aufgeklemmt sind. Die Verbindungselemente 21 können hierbei umlaufend an dem Innenstrang 20 angeordnet sein, wobei zwischen zwei benachbarten Verbindungselementen 21 ein vorgebbarer Abstand eingehalten ist, wie in Fig. 8 (die nur den Innenstrang 20 und die dort direkt angebrachten Komponenten der Gleitschutzkette 1 zeigt) veranschaulicht ist. Der Innenstrang 20 kann vorzugsweise als zugelastischer Strang mit einem Fliehkraft-aktivierten Spannschloss 7 ausgebildet sein, z.B. gemäß einer der in der WO 2008/058304 A2 der Anmelderin gezeigten Ausführungsformen.

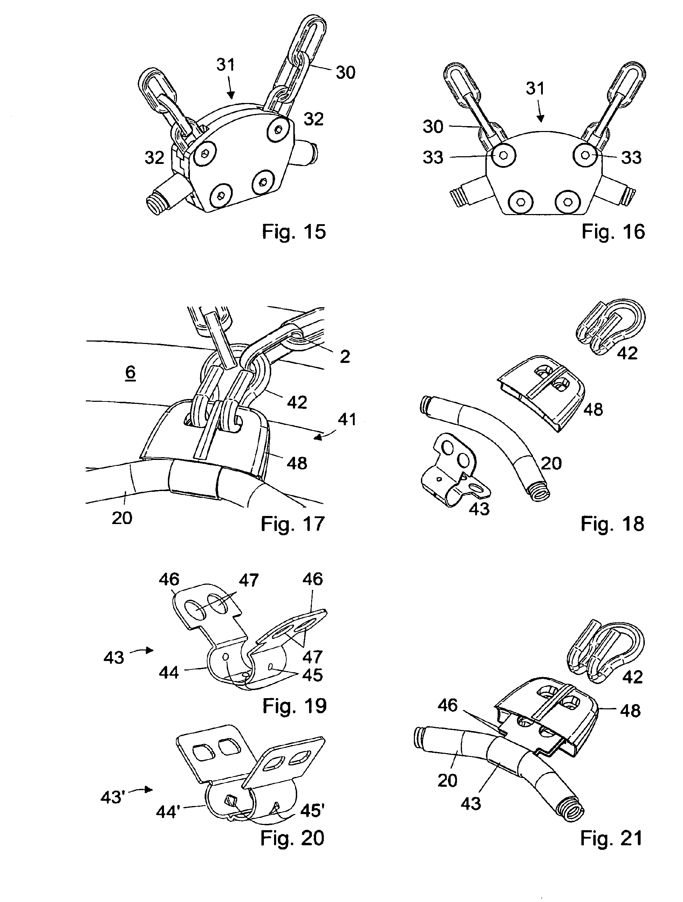

Bezugnehmend auf Fig. 9 kann in jedes der Verbindungselemente 21 ein den Innenstrang 20 mit dem Laufnetz bzw. den Spurkreuzen 2 verbindender Haken 22, oder direkt Kettenstränge des Spurkreuzes 2 (vgl. Fig. 15 wie untenstehend erläutert), eingehängt sein.

Fig. 10 und 11 zeigen, dass das Verbindungselement 21 zweiteilig mit einem der Reifenaußenseite abgewandten Vorderteil 23 und einen der Reifenaußenseite zugewandten Hinterteil 24 ausgebildet sein kann. In der hier gezeigten Ausführungsform sind Vorder- und Hinterteil 23, 24 bauartgleich, sodass durch die gleichartige Gestaltung vorteilhafter Weise dasselbe Bauteil sowohl als Vorder- als auch als Hinterteil verwendet werden kann und ein Verbindungselement 21 somit aus zwei gleichartigen Hälften zusammengesetzt wird (vgl. Fig. 13).

Zumindest eine Öffnung 25 zum Einhängen eines Hakens 22 befindet sich im oberen Teil (zur Radlauffläche zugewandten Abschnitt) des Bauteils 23, 24. Als Material für das Verbindungselement 21 (Vorder- und Hinterteil) kommen sowohl Kunststoffe als auch Metalle in Frage.

Gemäß Fig. 11 kann das Verbindungselement 21 einen Führungskanal 26 aufweisen, in welchem Fortsätze 27 zur Fixierung bzw. zum Klemmen einer Ummantelung des Innenstranges 20 angeordnet sind. Dabei kann sowohl in dem Vorderteil 23 des Verbindungselementes 21 als auch in dem Hinterteil 24 des Verbindungselementes 21 je eine einen U-förmigen Querschnitt aufweisende Hälfte des Führungskanals 26 angeordnet sein.

Die Fig. 12 bis 14 zeigen das Verbindungselement 21 mit eingelegtem Innenstrang 20. Mittels Führungsbolzen 28, die formschlüssig in eine korrespondierende Öffnung 29 des anderen Teils eingreifen und auf der Innenseite der Vorder- 23 und/oder Hinterteile 24 des Verbindungselementes 21 angeordnet sind, lässt sich eine gute Montage auf dem Innenstrang 20 gewährleisten. Bei einer bauartgleichen Ausführung der Vorder- und Hinterteile sind auf demselben Bauteil einander entsprechende Führungsbolzen 28 und korrespondierende Öffnung 29 vorgesehen, sodass jeweils ein Führungsbolzen des einen Bauteils 23, 24 in eine Öffnung des anderen Bauteils eingreifen kann. Dadurch ist eine formschlüssige Verbindung zwischen Vorder- 23 und Hinterteil 24 des Verbindungselementes 21 herstellbar. Ein Aufklemmen des Verbindungselementes 21 auf den Innenstrang 20 ist daher einfach durchzuführen.

Wieder bezugnehmend auf Fig. 9 können der Vorderteil 23 und der Hinterteil 24 des Verbindungselementes 21 zusätzlich über zumindest ein Verbindungsmittel 34, beispielsweise ein Niet oder eine Schraube, miteinander verbunden sein.

Fig. 15 und 16 zeigen eine weitere Ausführungsform des Verbindungsteils 31, der auch direkt in die Kettenstränge 30 des Laufnetzes bzw. der Spurkreuze 2 eingehängt sein kann. Hierbei können in zwei einander gegenüberliegende Endabschnitte 32 des Verbindungsteils zwei Endkettenglieder eingehängt und mit je einem Niet oder einer Schraube 33 gegen ein Herausrutschen aus dem Verbindungsteil 31 fixiert werden. Als Material für das Verbindungsteil 31 kommen sowohl Kunststoffe als auch Metalle in Frage.

In den Fig. 17 und 18 ist eine weitere Variante der Erfindung dargestellt, gemäß welcher das Verbindungselement 41 einen auf den Innenstrang 20 verrutschungs- und verdrehsicher aufklemmbaren Unterteil 43 aufweist. Die Anbindung des Innenstranges 20 an die Spurkreuze 2 bzw. das Laufnetz erfolgt über in das Verbindungselement 41 eingreifende Haken 42.

Wie aus den Fig. 19 und 20 ersichtlich, die zwei gleichermaßen geeignete Varianten des Unterteils 43, 43' zeigen, kann diese Komponente als Blechbiegeteil mit einem im Wesentlichen U-förmigen Querschnitt ausgebildet sein, wobei ein Bodenabschnitt 44, 44' der U-Form bauchig zu einer Führung ausgebildet sein kann, um den Innenstrang 20 aufnehmen zu können. An der seiner der Oberfläche des Innenstranges 20 zugewandten inneren Oberflächen kann der Unterteil 43, 43' auch einen oder mehrere, in Richtung des Innenstranges 20 ragende Klemmfortsätze 45, 45' aufweisen. Der Unterteil 43 weist außerdem zumindest einen Abschnitt 46 auf, der jeweils mit zumindest einer oder zwei Anschlussösen 47 für den Haken 42 versehen ist.

Bezugnehmend auf Fig. 21 ragt der Abschnitt 46 in einem montierten Zustand von dem Seitenstrang 20 weg und verläuft im Wesentlichen parallel zu einer Reifenflanke. Ferner kann ein in einem montierten Zustand von dem Haken 42 abschnittsweise durchgriffener Aufsatz 48 in Form einer Kunststoffabdeckung vorgesehen sein, welcher auf den Unterteil 43 aufschiebbar ist. Durch den Aufsatz 48 ist in einem montierten Zustand zumindest der Abschnitt 46 des Unterteils 43 im Wesentlichen umhüllt. Der Unterteil 43 ist bevorzugterweise aus Metall gefertigt, während der Aufsatz 48 bevorzugterweise aus Kunststoff hergestellt ist.

Der Innenstrang 20, auf den die Verbindungselemente 21, 31, 41 befestigt werden, weist zweckmäßiger Weise einen zugelastischen Strang (Zugstrang), vorzugsweise in Form einer Zugfeder 19, auf. Der von der Zugfeder 19 gebildete Zugstrang kann, wie in Fig. 8 illustriert, mithilfe eines Spannschlosses 7 zu einem Kreis geschlossen sein, wobei das Spannschloss fliehkraftaktiviert ist, d.h. es blockiert eine Bewegung des Stranges durch das Spannschloss, wenn das Rad, auf dem die Gleitschutzkette 1 aufgespannt ist, sich dreht. Die Gleitschutzkette kann jedoch auch ohne Spannschloss ausgeführt sein, wenn die Elastizität des Spannstranges dies zulässt.

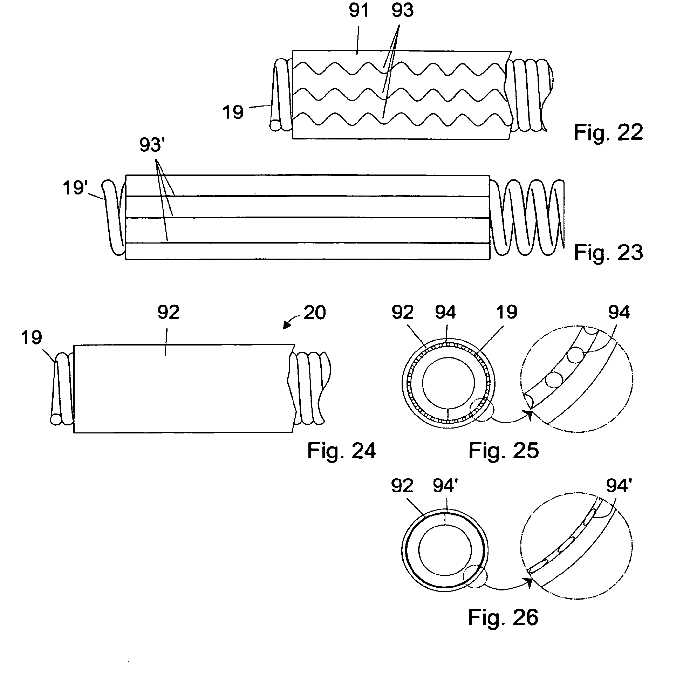

Bezugnehmend auf Fig. 22 bis 26 kann die Zugfeder 19 von einer als Umhüllung dienende Umwebung (Ummantelung) 91, 92 umgeben sein. Durch die Umwebung 91, 92 können die auf dem Strang 20 angebrachten Verbindungselemente 21, 31, 41 nicht wandern, wodurch die Form des Laufnetzes bewahrt und stabilisiert wird. Zudem erbringt die Umwebung 91, 92 einen Schutz der Zugfeder 19 vor Überdehnung. Dies gestattet einen praxistauglichen Einsatz einer Zugfeder der gezeigten Art als Spannelement in allen Betriebssituationen einer Gleitschutzkette. In Fig. 22 bis 24 ist lediglich der Deutlichkeit der Darstellung halber an den Enden des Stranges 20 die Ummantelung der Zugfeder entfernt.

In Fig. 22 ist eine Umwebung 91 dargestellt, die Sperrfäden 93 aufweist, die eine definierte maximale Länge aufweisen. Im ruhenden Zustand sind diese Sperrfäden 93 wie in der Zeichnung angedeutet gewellt oder aufgewickelt. Bei Dehnung des Spannstranges wie in Fig. 23 gezeigt werden die Sperrfäden 93' reversibel gestreckt und verhindern eine Dehnung über eine Länge die der geraden Ausrichtung der Sperrfäden entspricht. Durch die reversible Ausrichtung der Sperrfäden kann die Zugfeder immer auf ihre Ursprungslänge zurückfedern.

Fig. 24 zeigt eine andere Möglichkeit einer Umwebung 92. Hier enthält die Umwebung 92 Gummifäden 94, die gleichmäßig über den Umfang der Zugfeder verteilt sind und derart aufgebracht sind, dass sie im ruhenden Zustand in einem bestimmten Abstand von der Zugfeder angeordnet sind. Durch die Verschränkung der einzelnen Gewebefäden beim Dehnen des Spannstranges 20 wird naturgemäß der Durchmesser der Umwebung 92 verringert; hierbei werden die Gummifäden 94 flachgedrückt, bis keine weitere Verringerung des Durchmessers möglich ist und somit eine weitere Dehnung nicht mehr stattfinden kann. Dies ist in den Querschnittsdarstellungen der Fig. 25 und 26 gezeigt, die den Querschnitt der Umwebung 92 im Ruhezustand bzw. im Zustand der Enddehnung zeigen. Wie aus Fig. 26 ersichtlich ist, werden bei der Dehnung die Gummifäden 94' deformiert und gequetscht, bis eine weitere Einschränkung des von dem Gummifäden eingenommenen Raumes nicht mehr möglich ist.

Als weiterer Vorteil der Umwebung 91, 92 ergibt sich ein Schutz der Finger des Benutzers beim Montieren und Demontieren der damit ausgestatteten Gleitschutzketten. Beim Dehnen einer Schraubenfeder besteht grundsätzlich die Gefahr, dass Haut oder andere Teile zwischen die offenen Federgänge eindringen können und beim Zusammenfedern des Spannstranges eingeklemmt werden. Dies wird durch die Umwebung auf einfache Weise verhindert.

Als Material für die Umwebung können zweckmäßiger Weise Filamente auf Polyesterbasis und/oder Kevlar-Basis verwendet werden, die die erforderliche Abriebsbeständigkeit und Zugfestigkeit aufweisen.

In den gezeigten Ausführungsformen liegt der Seitenstrang 10 in montiertem Zustand der Reifenaußenseite an, während die Gleitschutzkette mittels eines Spannstranges gespannt wird, der als Innenstrang 20 der Reifeninnenseite anliegt. Die Erfindung erfasst jedoch auch Ausführungsformen, bei welchen die Rollen von Innen- und Außenstrang vertauscht sind, somit die Gleitschutzkette so ausgelegt ist, dass der Spannstrang außen (als Außenspannstrang) liegt.

## Patentansprüche

1. Gleitschutzkette (1) mit einem Laufnetz mit Spurkreuzen (2) und einem in einem montierten Zustand an einer Reifenseite (3) anliegenden Seitenstrang (10) sowie einem in einem montierten Zustand an der gegenüber liegenden Reifenseite (6) anliegenden Spannstrang (20), **dadurch gekennzeichnet, dass** auf dem dehnbaren Spannstrang (20) Verbindungselemente (21, 31, 41), in welche je ein den Spannstrang (20) mit zumindest einem Spurkreuz (2) verbindender Haken (22, 42) eingehängt ist, auf einer Ummantelung (91, 93) des Spannstranges (20) verrutschungssicher aufgeklemmt sind.

2. Gleitschutzkette nach Anspruch 1, **dadurch gekennzeichnet, dass** der Spannstrang als in montiertem Zustand der Reifeninnenseite (6) anliegendem dehnbaren Innenstrang (20) und der Seitenstrang als in montiertem Zustand der Reifenaußenseite (3) anliegenden Seitenstrang ausgebildet ist.

3. Gleitschutzkette nach Anspruch 1 oder 2, **dadurch gekennzeichnet, dass** die Verbindungselemente (21, 41) je zumindest eine Öffnung (25, 47) zum Einhängen des Hakens (22, 42) aufweisen.

4. Gleitschutzkette nach einem der Ansprüche 1 bis 3, **dadurch gekennzeichnet, dass** die Verbindungselemente (21) je zweiteilig mit einem der Reifenaußenseite abgewandten Vorderteil (23) und einen der Reifenaußenseite zugewandten Hinterteil (24) ausgebildet sind.

5. Gleitschutzkette nach Anspruch 4, **dadurch gekennzeichnet, dass** die Verbindungselemente (21, 31, 41) je einen Führungskanal (26, 44) aufweisen, in welchem Fortsätze (27, 45) zum Fixieren bzw. Klemmen angeordnet sind.

6. Gleitschutzkette nach Anspruch 5, **dadurch gekennzeichnet, dass** sowohl in dem Vorderteil (23) jedes Verbindungselementes (21, 31, 41) als auch in dem Hinterteil (24) jedes Verbindungselementes (21, 31, 41) je eine einen U-förmigen Querschnitt aufweisende Hälfte des Führungskanals (26, 44) angeordnet ist.

7. Gleitschutzkette nach einem der Ansprüche 4 bis 6, **dadurch gekennzeichnet, dass** der Vorderteil (23) und der Hinterteil (24) jedes Verbindungselementes (21, 31) über zumindest ein Verbindungsmittel (34), beispielsweise ein Niet oder eine Schraube, miteinander verbunden sind.

8. Gleitschutzkette nach einem der Ansprüche 4 bis 7, **dadurch gekennzeichnet, dass** der Vorderteil (23) und der Hinterteil (24) eines Verbindungselements bauartgleich ausgeführt sind.

9. Gleitschutzkette nach einem der Ansprüche 1 bis 3, **dadurch gekennzeichnet, dass** die Verbindungselemente (41) je einen auf den Spannstrang (20) aufklemmbaren Unterteil (43) mit zumindest einem in einem montierten Zustand von dem Seitenstrang wegragenden und im Wesentlichen parallel zu einer Reifenflanke verlaufenden Abschnitt (46) mit einer Anschlussöse (47) für den Haken (42) aufweisen, wobei zudem ein in einem montierten Zustand von dem Haken (42) abschnittsweise durchgriffener Aufsatz (48) vorgesehen ist, welcher auf den Unterteil aufschiebbar ist, der in einem montierten Zustand zumindest den Abschnitt (46) im wesentlichen umhüllt.

10. Gleitschutzkette nach Anspruch 9, **dadurch gekennzeichnet, dass** das der Unterteil (43) an zumindest seiner der Oberfläche des Spannstranges (20) zugewandten inneren Oberflächen zumindest einen Klemmfortsatz in Richtung des Spannstranges (20) aufweist.

11. Gleitschutzkette nach einem der Ansprüche 1 bis 10, **dadurch gekennzeichnet, dass** der Spannstrang (20) als zugelastischer Strang mit einem Fliehkraft-aktivierten Spannschloss (7) ausgebildet ist.

12. Gleitschutzkette nach einem der Ansprüche 1 bis 11, **dadurch gekennzeichnet, dass** der Spannstrang (20) als zugelastischer Strang mit einer Umhüllung (91, 92) mit als Sperrfäden dienenden Filamenten (93, 94), die lediglich bis zu einer maximalen Dehnung des Stranges streckbar sind, ausgebildet ist.

13. Gleitschutzkette nach Anspruch 12, **dadurch gekennzeichnet, dass** die Filamente aus einem Kunststoff bestehen, der ausgewählt ist aus der Gruppe bestehend aus Kunststoffen auf Polyesterbasis und Kunststoffen auf Kevlar-Basis.

14. Gleitschutzkette nach einem der Ansprüche 11 bis 13, **dadurch gekennzeichnet, dass** der zugelastische Spannstrang eine Zugfeder (19) aufweist, die von einer als Umhüllung dienende Umwebung umgeben ist.

## Claims

1. Anti-skid chain (1) with a chain mesh with track patterns (2), and a side strand (10) in contact with the side of the tyre (3) in a mounted state, as well as a tensioning strand (20) in contact with the opposite facing side of the tyre (6) in a mounted state, **characterised in that** on the stretchable tensioning strand (20), connecting elements (21, 31, 41), in each of which hook (22, 42) connecting the tensioning strand (20) with at least one track pattern (2) is mounted, are clamped to the casing (91, 93) of the tensioning strand (20) in a way that prevents slipping.

2. Anti-skid chain according to claim 1, **characterised in that** the tensioning strand is formed as a stretchable internal strand (20) in contact with the inside of the tyre (6) in a mounted state, and the side strand is formed as a side strand in contact with the external side of the tyre (3) in a mounted state.

3. Anti-skid chain according to claim 1 or 2, **characterised in that** the connecting elements (21, 41) each feature at least one opening (25, 47) for mounting the hook (22, 42).

4. Anti-skid chain according to any one of claims 1 to 3, **characterised in that** the connecting elements (21) are each formed in two parts with a front part (23) turned away from the outside of the tyre, and a back part (24) turned towards the outside of the tyre.

5. Anti-skid chain according to claim 4, **characterised in that** the connecting elements (21, 31, 41) each have a guide channel (26, 44), in which extensions (27, 45) for fixing or clamping are arranged.

6. Anti-skid chain according to claim 5, **characterised in that** in both in front part (23) of each connecting element (21, 31, 41) and in the back part (24) of each connecting element (21, 31, 41), each half of the guide channel (26, 44) forming a U-shaped cross-section is arranged.

7. Anti-skid chain according to any one of claims 4 to 6, **characterised in that** the front part (23) and back part (24) of each connecting element (21, 31) are connected to each other using at least one connective means (34), for example, a rivet or a screw.

8. Anti-skid chain according to any one of claims 4 to 7, **characterised in that** the front part (23) and the back part (24) of a connecting element are identically designed.

9. Anti-skid chain according to any one of claims 1 to 3, **characterised in that** the connecting elements (41) each have an under part (43) which can be clamped to the tensioning strand (20), with at least one portion (46) projecting away from the side strand in a mounted state and running substantially parallel to a tyre wall, the portion having attachment eyes (47) for the hook (42), whereby in addition an attachment (48) in a mounted state partly engaged by the hook (42) is provided, which is displaceable along the under part, which in a mounted state substantially encases at least the portion (46).

10. Anti-skid chain according to claim 9, **characterised in that** the under part (43), on at least its internal surfaces turned towards the surface of the internal strand (20), features at least one clamping extension in the direction of the tensioning strand (20).

11. Anti-skid chain according to any one of claims 1 to 10, **characterised in that** the tensioning strand (20) is formed as a tensionally elastic strand with a turnbuckle (7) activated by centrifugal force.

12. Anti-skid chain according to any one of claims 1 to 11, **characterised in that** the tensioning strand (20) is formed as a tensionally elastic strand with an encasement (91, 92) with filaments (93, 94) serving as blocking threads, which are simply tensile up to a maximum elongation of the strand.

13. Anti-skid chain according to claim 12, **characterised in that** the filaments consist of a plastic, which is chosen from the group of types of plastic with a polyester base, and plastics with a Kevlar base.

14. Anti-skid chain according to any one of claims 11 to 13, **characterised in that** the tensionally elastic tensioning strand features a tension spring (19), which is surrounded by an envelopment serving as an encasement.

## Revendications

1. Chaîne de protection contre le glissement (1) comportant une bande de roulement avec des maillons croisés (2) et comportant un chaînon latéral (10) reposant à l'état monté sur le flanc du pneu (3) ainsi qu'un chaînon de serrage (20) reposant à l'état monté sur le flanc opposé (6) du pneu, **caractérisée en ce que**, au niveau du chaînon de serrage (20) extensible, des éléments de liaison (21, 31, 41), auxquels respectivement est accroché un crochet (22, 42) reliant le chaînon de serrage (20) à au moins un maillon croisé (2), sont bloqués de manière à ne pas pouvoir glisser sur un revêtement (91, 93) du chaînon de serrage (20).

2. Chaîne de protection contre le glissement selon la revendication 1, **caractérisée en ce que** le chaînon de serrage est réalisé comme un chaînon intérieur (20) extensible reposant à l'état monté sur le flanc intérieur du pneu (6), et **en ce que** le chaînon latéral est réalisé comme un chaînon latéral reposant à l'état monté sur le flanc extérieur du pneu (3).

3. Chaîne de protection contre le glissement selon la revendication 1 ou 2, **caractérisée en ce que** les éléments de liaison (21, 41) présentent respectivement au moins une ouverture (25, 47) servant à accrocher le crochet (22, 42).

4. Chaîne de protection contre le glissement selon l'une quelconque des revendications 1 à 3, **caractérisée en ce que** les éléments de liaison (21) sont respectivement réalisés en deux parties avec une partie avant (23) faisant face au flanc extérieur du pneu et une partie arrière (24) tournée vers le flanc extérieur du pneu.

5. Chaîne de protection contre le glissement selon la revendication 4, **caractérisée en ce que** les éléments de liaison (21, 31, 41) présentent respectivement un canal de guidage (26, 44) dans lequel sont disposés des prolongements (27, 45) servant à la fixation et/ou au blocage.

6. Chaîne de protection contre le glissement selon la revendication 5, **caractérisée en ce que** respectivement une moitié du canal de guidage (26, 44) présentant une section transversale en forme de U est disposée aussi bien dans la partie avant (23) de chaque élément de liaison (21, 31, 41) que dans la partie arrière (24) de chaque élément de liaison (21, 31, 41).

7. Chaîne de protection contre le glissement selon l'une quelconque des revendications 4 à 6, **caractérisée en ce que** la partie avant (23) et la partie arrière (24) de chaque élément de liaison (21, 31) sont reliées entre elles par l'intermédiaire d'au moins un moyen de liaison (34), par exemple par l'intermédiaire d'un rivet ou d'une vis.

8. Chaîne de protection contre le glissement selon l'une quelconque des revendications 4 à 7, **caractérisée en ce que** la partie avant (23) et la partie arrière (24) d'un élément de liaison sont réalisées de manière identique en termes de construction.

9. Chaîne de protection contre le glissement selon l'une quelconque des revendications 1 à 3, **caractérisée en ce que** les éléments de liaison (41) présentent respectivement une partie inférieure (43) pouvant être calée sur le chaînon de serrage (20), présentant au moins une section (46) avec un oeillet de raccordement (47) pour le crochet (42) faisant saillie du chaînon latéral à l'état monté et s'étendant essentiellement de manière parallèle par rapport à un flanc du pneu, moyennant quoi une garniture (48) pénétrée par section à l'état monté par le crochet (42) est en outre prévue, laquelle peut coulisser sur la partie inférieure qui enveloppe essentiellement à l'état monté au moins la section (46).

10. Chaîne de protection contre le glissement selon la revendication 9, **caractérisée en ce que** la partie inférieure (43) présente au moins un prolongement de blocage en direction du chaînon de serrage (20) au niveau au moins de sa surface intérieure tournée vers la surface du chaînon de serrage (20).

11. Chaîne de protection contre le glissement selon l'une quelconque des revendications 1 à 10, **caractérisée en ce que** le chaînon de serrage (20) est réalisé comme un chaînon élastique à la traction comportant un verrou de serrage (7) activé par la force centrifuge.

12. Chaîne de protection contre le glissement selon l'une quelconque des revendications 1 à 11, **caractérisée en ce que** le chaînon de serrage (20) est réalisé comme un chaînon élastique à la traction comportant un revêtement (91, 92) avec des filaments (93, 94) servant de fils d'arrêt, lesquels peuvent être étirés seulement jusqu'à une extension maximale du chaînon.

13. Chaîne de protection contre le glissement selon la revendication 12, **caractérisée en ce que** les filaments se composent d'une matière synthétique qui est choisie parmi le groupe constitué de matières synthétiques à base de polyesters et de matières synthétiques à base de kevlar.

14. Chaîne de protection contre le glissement selon l'une quelconque des revendications 11 à 13, **caractérisée en ce que** le chaînon de serrage élastique à la traction présente un ressort de traction (19) qui est entouré d'un tissu servant de revêtement.
